# EUROPEAN PATENT SPECIFICATION

(11) **EP 0 294 978 B1**
(45) Date of publication and mention of the grant of the patent: **31.03.1993**
(21) Application number: 88304889.4
(22) Date of filing: 27.05.1988
(51) Int. Cl.: H02K 15/08

(54) **Wire supply method and apparatus**
Drahtversorgungsverfahren und Gerät
Méthode et appareil d'alimentation de fil

(30) Priority: 09.06.1987 US 60040
(43) Date of publication of application: 14.12.1988
(73) Proprietor: GLOBE PRODUCTS INC., Dayton, Ohio 45424 (US)
(72) Inventor: Lachey, Richard N., New Carlisle Ohio 45344 (US)
(74) Representative: Lerwill, John

(56) References cited:
- US-A- 3 251 559
- US-A- 4 062 502
- US-A- 4 199 115

## Description

This invention relates to a wire supply method and apparatus particularly for stator winding machines. The method and apparatus of this invention are especially adapted for use in the high speed winding of 2-pole stators but the invention is not necessarily so limited.

Procedures for winding coils on 2-pole stators are described in U.S. Pat. No. Re 25,281 granted to H. W. Moore on Nov. 6, 1962 and U.S. Pat. No. 3,251,559 granted to H. W. Moore on May 17, 1966. A typical 2-pole stator winding machine includes a winding head or shuttle having a pair of wire guide nozzles or needles. Two wires, one for each of the needles, are coursed from a pair of wire supply spools through the shuttle and extended out of the needles. The shuttle is reciprocated to repeatedly pass in opposite directions through the stator core. At each end of its reciprocatory travel the shuttle is oscillated about its axis, the direction of oscillation being opposite at opposite ends of the stator. Accordingly, the coil end turns are formed during the oscillatory motions and the coil sides are formed during the reciprocatory motions of the shuttle.

At the beginning of the winding of coils on a stator, the forward ends of the wires are clamped or tied down and the wires exiting from the supply spools are coursed through wire tensioning and dereeling devices so that, ideally, the wires are under tension throughout the winding operation and the coil turns will closely follow the contours of the winding forms. A typical prior tensioning and dereeling device is shown in U.S. Pat. No. 2,643,075 granted to K. A. Moore on June 23, 1953.

A powered wire takeup device has also been used which operates in synchronism with the winding shuttle, such a takeup device being disclosed in the above mentioned U.S. Pat. No, 3,251,559. In general, the wire takeup device shown in the '559 patent draws wire when the winding head is not drawing wire and then releases the wire when the winding head is drawing wire so that there is a more uniform demand for wire from the dereeler. The apparatus shown in the '559 patent has been successfully used on stator winding machines having shuttle spindles which operate in the range of 800 or 900 complete strokes per minute.

It has been discovered that a combination of a dereeling device such as shown in the above mentioned K. A. Moore U.S. Pat. No. 2,643,075 and the powered wire takeup device shown in the H. W. Moore U.S. Pat. No, 3,251,559 do not adequately control the wire tension for stator winding machines having shuttle speeds operating in the range of 1000 or more complete strokes per minute. As a result, the wires exiting from the winding head of such machines may tend to balloon outwardly instead of closely following the guide surfaces which are provided for the wire. The wound coils have loosely formed turns and, especially with fine wire, breakage may occur.

More elaborate tensioning and dereeling devices have been developed especially for high speed winders operating in excess of 800 or 900 complete strokes per minute, one such device being shown in U.S. Pat. No. 4,062,502, granted to K. E. Peck, Jr., on Dec. 13, 1977. The apparatus of the '502 patent may be used with winding machines operating at shuttle speeds as high as 1200 complete strokes per minute but in some cases, particularly with fine wire, such apparatus is not successful in preventing wire breakage or loosely wound coils at that speed.

To date there has been no fully satisfactory device known to applicant developed for use with a high speed stator winder operating in the range of approximately 1200 complete strokes per minute or higher without the formation of loosely wound coils or without occasional wire breakage. Wire breakage is believed to be caused by abrupt reversals in the directions of shuttle movement and also because the momentum of the wires at the end of the reciprocating strokes causes them to balloon outwardly from the shuttle needles where they may become snagged on parts of the stator being wound or on nearby parts of the machine. It has been suggested to locate shields between the winding needles and parts on which the wires tend to snag. However, so far as known, no fully satisfactory shield has been developed. U.S. Pat. No. 4,199,115, issued to Richard N. Lachey on April 22, 1980, discloses a wire control device that may reduce the effects of wire ballooning in certain cases but does fully overcome the problems of loosely wound coils and wire breakage. Recently, a demand has arisen for stator winding machines operating in the range of approximately 1800 or more complete strokes per minute and the known devices for supplying wire to the winding machine are inadequate to provide a reliable source of wire under the uniform tension needed to prevent loose coils and wire breakage.

### SUMMARY OF THE INVENTION

A primary object of this invention is to provide a wire supply method and apparatus for a high speed stator winding machine that enables the winding of coils with tighter turns resulting from the wire more closely following the contours of the winding forms and minimizes wire breakage. A more specific object of this invention is to provide such a wire supply method and apparatus that is useful with stator winding machines operating in the range of 1200 or more complete strokes per minute as well as for machines operating at lower speeds.

In accordance with this invention, a method and apparatus are provided for tightly winding stator cores at high speeds using a stator winding machine of the type having means at its forward end for supporting an unwound stator core, a winding shuttle having a wire inlet at its rearward end and a wire outlet at its forward end, means for reciprocating the shuttle in forward and reverse directions along a predetermined axis and rotationally oscillating the shuttle to draw a wire from a source of wire under tension into the wire inlet and out of the wire outlet to wind a coil around surfaces of a stator core. It is contemplated that the method and apparatus of this invention will primarily be used for winding 2-pole stators wherein two coils are wound simultaneously using two strands of wire from two wire sources, but there may be applications wherein only one coil or more than two coils may be wound at one time.

The method includes the engagement of the portion of the wire about to enter the wire inlet when the shuttle approaches the end of each of its forward strokes by a convex friction plate to frictionally restrain forward movement of the wire. To this end, the friction plate is mounted on the rearward end of the shuttle and has a wire engaging surface spaced rearwardly of and confronting the wire inlet to the shuttle. This is preferably used with supply means including wire guide means for guiding the tensioned wire to the wire inlet along an axis intersecting the axis of shuttle reciprocation and intermediate the forwardmost and rearwardmost positions of the wire inlet so that the wire engages the wire engaging surfaces of said friction plate when the plate moves forwardly of the wire guide means.

The wire guide means is preferably adjustably mounted relative to the shuttle axis along paths substantially parallel to and substantially perpendicular to the shuttle axis so that the length of time during which the wire is engaged with the wire-engaging surface of the friction plate, and the length of the face engaged by the plate, may be adjusted as needed to optimize the restraint applied to the forward motion of the wire. To provide for further adjustment of the restraint, the friction plate preferably has a first pair of opposite margins and a second pair of opposite margins, the wire engaging surface having a first, longer, dimension between the first pair of opposite margins and a second, shorter, dimension between the second pair of opposite margins, and the plate may be optionally positioned so that either the longer dimension portion or the shorter dimension portion will engage the wire.

The means mounting the friction plate on the spindle may comprise a bracket having arms located out of the path of the wire portions extending from the wire guide means and the wire inlet. The use of the teachings of this invention may enable more turns of wire to be wound on the pole pieces of stator cores to thereby increase the power of the stator without increasing its size because of the compact winding of the coils. It will be appreciated that the use of this invention would add little to the cost of a stator winding machine and that substantial economies may be obtained by the use of this invention because of the reduction of scrapped parts resulting from wire breakage and loose coils.

Other objects and advantages will become apparent from the following description and the drawings.

### BRIEF DESCRIPTION OF THE DRAWINGS

FIG. 1 is a highly diagrammatic, fragmented, and simplified isometric view of a stator winding machine embodying the present invention.
FIG. 2 is a plan view of a portion of the machine of FIG. 1.
FIG. 3 is plan view of the same portion of the machine as FIG. 2, but at a different time in the operating cycle thereof.
FIG. 4 is an elevational view of a tensioning device used in the machine of FIG. 1, clamped to a support bar which is shown in cross section.
FIG. 5 is a fragmentary cross sectional view of a portion of the shuttle of the machine of FIG. 1 and including the friction plate mounted thereon. FIG. 5 also shows, in phantom, a different orientation of the friction plate.
FIG. 6 is a cross sectional view of the shuttle, taken along line 6-6 of FIG. 5.
FIG. 7 is cross sectional view of the shuttle similar to FIG. 6, but showing the friction plate in the orientation illustrated by phantom lines in FIG. 5.
FIG. 8 is a fragmentary exploded view illustrating the manner in which the friction plate is mounted as shown in FIG. 6.
FIG. 9 is a fragmentary exploded view similar to FIG. 8 but illustrating the manner in which the friction plate is mounted as shown in FIG. 7.

### DESCRIPTION OF THE PREFERRED EMBODIMENT

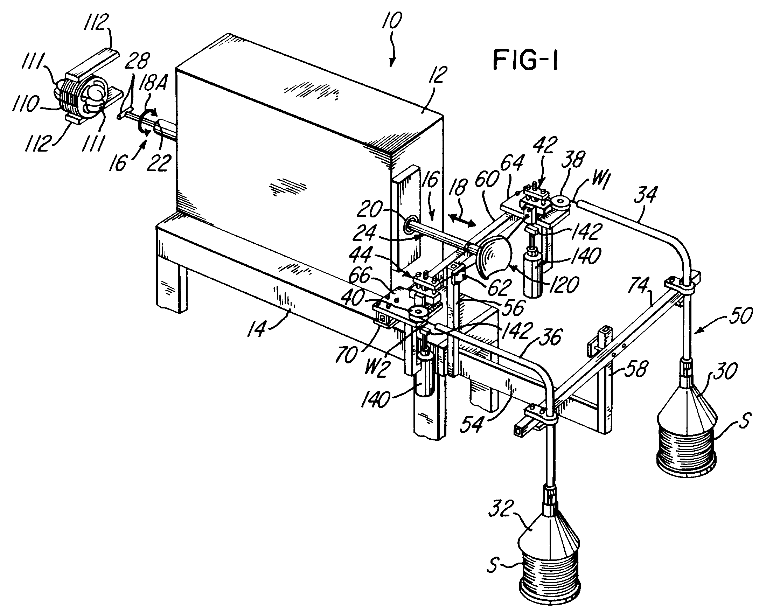

With reference to FIG. 1, this invention is disclosed embodied in a stator winding machine generally designated 10 including a drive housing 12 mounted on a machine bed 14. A shuttle, generally designated 16, is mounted for reciporocating and rotationally oscillating movements about its longitudinal axis as indicated by arrows 18 and 18A, respectively. Bearings 20 and 22 on the housing 12 establish the axis of reciprocation and rotational oscillation.

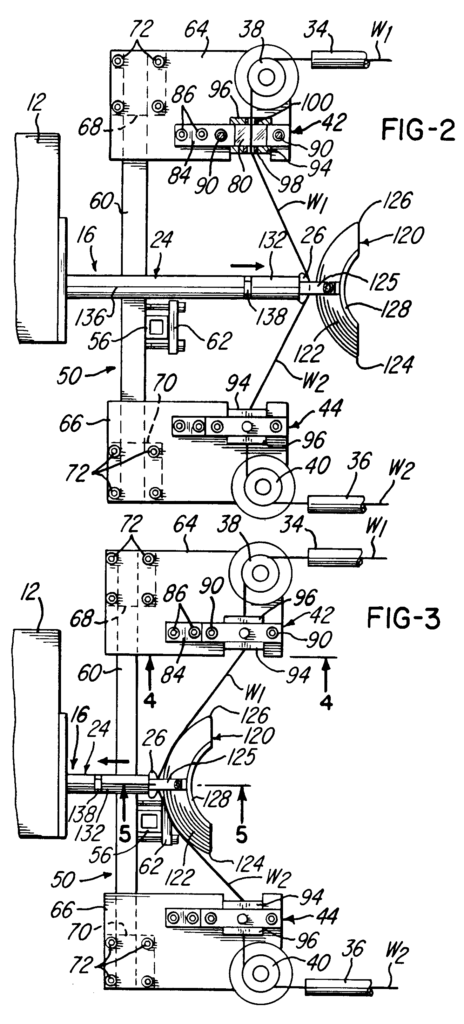

With continued reference to FIG. 1, and also with reference to FIGS. 2, 3, and 5, the shuttle 16 includes a hollow spindle assembly 24 and an eyelet 26 at the rearmost end of the spindle assembly 24 which forms a wire inlet into the hollow interior of the spindle assembly 24. Shuttle 16 further includes a pair of radially outwardly projecting wire outlets or guide needles 28 (FIG. 1), such needles being fixed to the forward end of the hollow spindle assembly 24.

A pair of coil-forming wires, designated W₁ and W₂, are supplied from a pair of respective spools S, to the wire inlet 26 upwardly through a pair of respective funnel-like wire guides 30 and 32, upwardly and forwardly through a pair of respective wire guide tubes 34 and 36, forwardly and then at right angles and inwardly toward the shuttle axis around a pair of respective turning pulleys 38 and 40. As well known, for proper operation of the winding machine 10, it is essential to place the wires under some tension after the wires leave the spools and before they enter the shuttle spindle assembly 24. For this purpose, the wires W₁ and W₂ pass through a pair of respective pressure pad wire dereelers or tensioners, generally designated 42 and 44, and then directly into the wire inlet 26.

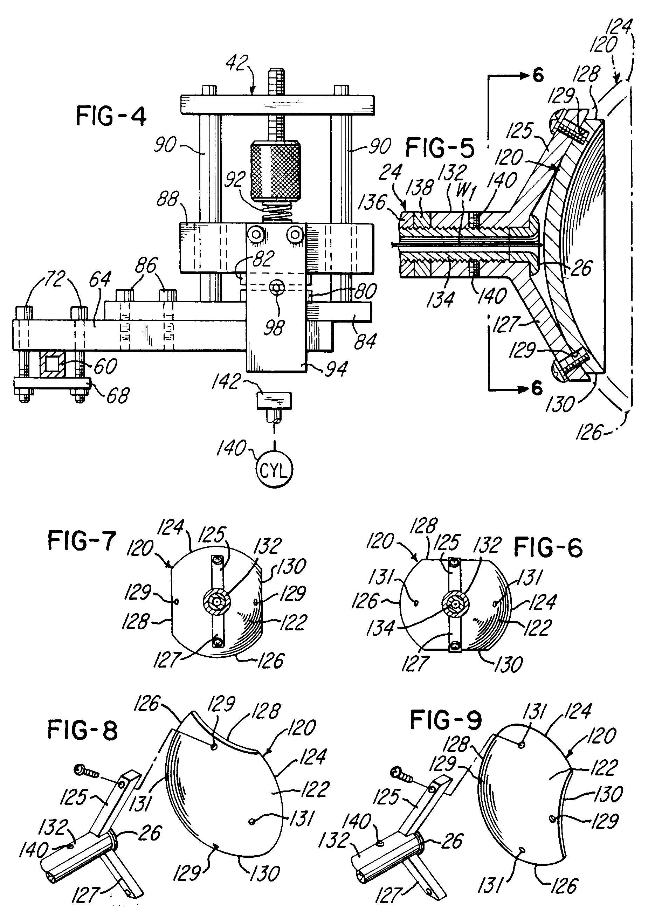

The various wire guide and tension members are mounted on a framework, generally designated 50, that provides for substantially horizontal and vertical relative adjustment of the guide and tension members. This type of framework has been used for several year and may include, as illustrated in FIG. 1, a rearwardly extending main mounting plate 54 affixed to the machine bed 14, forward and rearward vertical masts 56 and 58, respectively, at the opposite ends of the mounting plate 54. A forward horizontal bar 60 is held in an adjusted vertical position by a clamp 62 to the forward mast 56 and provides support for small, horizontal mounting plates 64 and 66 for the turning pulleys 38 and 40 and the wire tensioners 42 and 44, respectively. Mounting plates 64 and 66 are clamped in adjustable positions to the forward horizontal bar 60 by clamps 68 and 70 which provide for an adjustment of the tensioners toward and away from the axis of the axis of the shuttle 16. As shown best in FIG. 4, the clamps include clamp bolts 72 that are spread apart by more than the width of the mounting bar 60 so an adjustment in a direction parallel to the axis of the spindle is also possible. Framework 50 also includes a rearward horizontal bar 74 clamped to the rearward mast 58 for supporting the wire guide members 30, 32, 34 and 36.

Wire dereelers or tensioners 42 and 44 could be entirely conventional, but the tensioner 42 shown in FIG. 4 is presently preferred. As shown therein, tensioner 42 comprises a pair of opposing, carbide or other hardened steel pressure plates 80 and 82. Lower pressure plate 80 is fixedly mounted on top of a base plate 84 attached to the mounting plate 64 by bolts 86. Upper pressure plate 82 is affixed to the underside of a vertically movable bar 88 guided by rods 90 and biased downwardly by a coil spring 92 around a threaded shaft provided with an adjusting nut. With reference to FIGS. 2 and 4, outer and inner tensioner side plates 94 and 96, respectively, extend downwardly from the sides of the vertically movable bar 88. The wire to be tensioned is squeezed between the plates 80 and 82 being guided thereto from the turning pulley 40 through an eyelet 98 in the outer side plate 94 and directed to the shuttle inlet 26 by an eyelet 100 in the inner side plate 96.

Those familiar with the art will recognize that the winding machine 10 as thus far described is representative of winding machines used for the winding of coils on two-pole stators. In operation, at the commencement of the winding of a pair of coils, the free ends of a pair of wire strands are clamped in any suitable manner (not shown). A stator 110 (FIG. 1) with winding forms 111 attached is mounted as by tracks 112 forwardly of and aligned with the shuttle 16. The shuttle 16 is driven through a repeated series of forward and rearward reciprocatory motions along its longitudinal axis and at each end of its reciprocatory movement is oscillated or rotated about its longitudinal axis to accomplish the winding of coils. The winding procedures are described in greater detail in, for example, the aforementioned Moore U.S. Pat. No. 3,251,559. That patent also illustrates one type of reciprocating and oscillating drive mechanism of which numerous types have been patented and marketed. Since this invention is applicable to any type of reciprocating and oscillating drive mechanisms including conventional drives, none is illustrated herein.

In accordance with this invention, a friction plate 120 is mounted on the extreme rearward end of the shuttle 16 for engaging the portion of the wires W₁ and W₂ about to enter the wire inlet 26 when the shuttle 16 approaches the end of each of its forward strokes. Friction plate 120 has a highly polished, convex wire-engaging surface 122 confronting and spaced from the wire inlet 26 so that, as the plate 120 begins to move past the wire portions extending from the wire tensioners to the wire inlet 26, it engages these wires portions, as shown in FIG. 3, slightly taking up some of the slack that might otherwise be created as the shuttle begins to stop its forward movement and, more importantly, rubbing against the wires so frictionally restrain their forward movement when the shuttle 16 approaches the end of each of its forward strokes.

The shape of the wire-engaging face may be substantially spherical but other shapes may also be useful. In any case, the shape should be arcuately convex so that it will not snag the wire portions passing therealong. The length of the engagement between the friction plate and the wire portions will establish the degree of restraint to forward movement of the wires. In general, the finer wires should have a longer path of travel across the wire-engaging surface 122. This path length can be controlled by adjustment of the positions of the wire tensioners. Further, the friction plate 120 preferably has a first pair of opposite margins 124 and 126 and a second pair of opposite margins 128 and 130, the wire engaging surface 122 having a first, longer, dimension between the first pair of opposite margins 124, 126 and a second, shorter, dimension between the second pair of opposite margins 128, 130. In addition, as shown in FIGS. 6 through 9, the rearward end of the shuttle 16 is removably bolted to a pair of bracket arms 125 and 127 and the friction plate is provided with two sets of tapped mounting holes 129 and 131 so that the the frictionplate 120 may be optionally positioned so that either said longer dimension portion or said shorter dimension portion of said wire-engaging surface engages said wire to accomodate different winding applications.

To provide for the mounting of the friction plate on the shuttle 16, the bracket arms 125 127 are mounted on a hollow tubular member 132 that, in accordance with this invention, forms part of the spindle assembly 24. The eyelet 26 is press fit into the end of the member 132 and the member 132 is internally threaded to threadedly recieve an externally threaded hollow connector tube 134. Connector tube 134 is also threaded into the end of a forward, hollow, spindle tube 136, these spinddle assembly parts being locked together by a jam nut 138. Optionally, the hollow tube may be also locked to the member 132 by set screws 140.

It may be noted that the wire portions between the tensioning devices and the wire inlet 26 are guided along an axis intersecting the shuttle axis and intermediate the forwardmost and rearwardmost positions of said wire inlet so that the wire engages the wire engaging surface of the friction plate when the plate moves forwardly of the wire guides.

An air cylinder 140 is shown in FIG. 4 drives a block 142 for lifting the tensioner side plates 94 and 96 as such is necessary to temporarily remove tension from the wires.

Although the presently preferred embodiment of this invention has been disclosed, it will be understood that within the purview of this invention various changes may be made.

## Claims

1. A method of winding a stator comprising the steps of supporting an unwound stator core at the forward end of a stator winding machine having a winding shuttle with a wire inlet at its rearward end and a wire outlet at its forward end guiding wire to the inlet of the winding shuttle from a wire source, the wire passing through the winding shuttle to the outlet, reciprocating said shuttle in forward and reverse directions along a predetermined axis and oscillating said shuttle rotationally about said predetermined axis thereby causing wire to be drawn from the wire source and to wind a coil around surfaces of the stator core, characterised in that the portion of the wire about to enter said inlet when said shuttle approaches the end of each forward stroke thereof is engaged with a convex surface to restrain frictionally forward movement of said wire through said shuttle at the end of each forward stroke of said shuttle.

2. A method of winding a 2-pole stator comprising the steps of supporting an unwound stator core at the forward end of a stator winding machine having a winding shuttle with a wire inlet at its rearward end and a pair of wire outlets at its forward end, guiding a pair of wires from a wire source to the inlet of the winding shuttle, the wires passing through the winding shuttle to the respective outlets, reciprocating said shuttle in forward and reverse directions along a predetermined axis and oscillating said shuttle rotationally about said predetermined axis thereby causing the pair of wires to be drawn from the wire source and to wind simultaneously a pair of coils around surfaces of the stator core, characterised in that the portions of the wires about to enter said inlet when said shuttle approaches the end of each forward stroke thereof are engaged with by a convex surface to restrain frictionally forward movement of said wires through said shuttle at the end of each forward stroke of said shuttle.

3. A stator winding machine comprising (112) at a forward end thereof for supporting an unwound stator core, a winding shuttle (16) having a wire inlet (26) at its rearward end and a wire outlet (28) at its forward end, means for reciprocating said shuttle in forward and reverse directions along a predetermined axis and oscillating said shuttle rotationally about said predetermined axis to draw a wire (W₁;W₂) from a wire source into said wire inlet and out of said wire outlet to wind a coil around surfaces of a stator core aligned with said predetermined axis, characterised in the means (120) mounted on said shuttle (16) is arranged to move into engagement with the portion of the wire about to enter said inlet (26) when said shuttle approaches the end of each of its forward strokes to restrain frictionally forward movement of said wire (W₁;W₂) through said shuttle at the end of the forward stroke of said shuttle.

4. A machine according to claim 3, wherein the winding shuttle (16) has a wire inlet (26) at its rearward end and a pair of wire outlets (28) at its forward end for a pair of wires to be from a pair of wire sources into said wire inlet and out of respective wire outlets for winding simultaneously a pair of coils around surfaces of a stator core aligned with said predetermined axis, said means (120) being arranged to move into engagement with the portions of both wires about to enter said inlet when said shuttle approaches the end of each forward stoke thereof to restrain frictionally forward movement of said wires through said shuttle at the end of the forward stroke of said shuttle.

5. A machine according to claim 3 or 4, wherein said means comprises a friction member (120) mounted on said shuttle (16) for movement therewith and having a wire engaging surface (122) spaced rearwardly from and confronting said wire inlet (26).

6. A machine according to claim 5, wherein said wire engaging surface (122) is convex.

7. A machine according to claim 5 or 6, wherein for the or each wire guide means (30-42) is provided for guiding the wire between said source and said wire inlet, arranged to direct the wire to the inlet from a position located along an axis intersecting said predetermined axis and intermediate the forwardmost and rearwardmost positions of the said wire inlet (26) so that said wire engages said wire engaging surface of said friction plate when said plate moves forwardly of said intermediate position.

8. A machine according to claim 7 wherein said guide means is adjustable for varying said position relative to said predetermined axis along paths substantially parallel to and substantially perpendicular to said predetermined axis.

9. A machine according to claim 7 or 8, wherein said shuttle (16) comprises an elongate, hollow spindle (24), and the friction member comprises a friction plate (120) carried by mounting means on the rearward end of said spindle with said wire-engaging surface aligned with, facing, and spaced from said wire inlet.

10. A machine according to claim 9, wherein said means mounting said friction plate on said spindle comprises a bracket having arms (125,127) located out of the path of the wire portions extending from said wire guide means to said wire inlet.

11. A machine according to claim 9 or 10 wherein said friction plate has a first pair of opposite margins (124,126) and a second pair of opposite margins (128,130), said wire engaging surface having a first, longer, dimension between said first pair of opposite margins and a second, shorter, dimension between said second pair of opposite margins, and wherein said friction plate is adjustably mounted to enable said friction plate to be optionally positioned so that either said longer dimention portion or said shorter dimension portion of said wire-engaging surface engages the or each wire (W₁,W₂).

12. A machine according to any one of claims 4 to 11, wherein said wire-engaging surface is highly polished.

## Patentansprüche

1. Verfahren zum Wickeln eines Stators, das die Verfahrensschritte der Halterung eines ungewickelten Statorkerns an dem vorderen Ende einer Statorwickelmaschine, die ein Wickelschiffchen mit einem Drahteinlaß an seinem rückwärtigen Ende und einem Drahtauslaß an seinem vorderen Ende aufweist, Führung des Drahtes zu dem Einlaß des Wickelschiffchens von einem Drahtvorrat, Hindurchführung des Drahtes durch das Wickelschiffchen zu dem Auslaß, Umkehrung des Schiffchens nach vorne und in umgekehrter Richtung entlang einer vorgegebenen Achse, und Hin- und Herschwingen des Schiffchens unter Drehung um die vorgegebene Achse, wodurch bewirkt wird, daß Draht von dem Drahtvorrat abgezogen wird und eine Spule um die Flächen des Statorkerns gewickelt wird, aufweist, dadurch gekennzeichnet, daß der Bereich des Drahtes in den Einlaß eintritt, wenn das Schiffchen das Ende jedes nach vorne gerichteten Arbeitstaktes erreicht, wobei er mit einer konvexen Fläche in Eingriff gelangt, um unter Reibung die nach vorne gerichtete Bewegung des Drahtes durch das Schiffchen an dem Ende jedes nach vorne gerichteten Arbeitstaktes des Schiffchens zurückzuhalten.

2. Verfahren zum Wickeln eines zwei-poligen Stators, das die Verfahrensschritte der Halterung eines ungewickelten Statorkerns an dem vorderen Ende einer Statorwickelmaschine, die ein Wickelschiffchen mit einem Drahteinlaß an seinem rückwärtigen Ende und ein Paar von Drahtauslässen an seinem vorderen Ende aufweist, Führung eines Paars von Drähten von einem Drahtvorrat zu dem Einlaß des Wickelschiffchens, wobei die Drähte durch das Wickelschiffchen zu den entsprechenden Auslässen hindurchführen, Umkehrung des Schiffchens in eine nach vorne und umgekehrte Richtung entlang einer vorgegebenen Achse, und Hin- und Herschwingen des Schiffchens unter Drehung um die vorgegebene Achse, wodurch bewirkt wird, daß das Paar der Drähte von dem Drahtvorrat abgezogen wird und daß gleichzeitig ein Paar von Spulen um die Flächen des Statorkerns gewickelt werden, aufweist, dadurch gekennzeichnet, daß die Bereiche des Drahtes in den Einlaß eintreten, wenn das Schiffchen das Ende jedes nach vorne gerichteten Arbeitstaktes erreicht, wobei sie mit einer konvexen Oberfläche in Eingriff gebracht werden, um unter Reibung die nach vorne gerichtete Bewegung der Drähte durch das Schiffchen an dem Ende jedes nach vorne gerichteten Arbeitstaktes des Schiffchens zurückzuhalten.

3. Statorwickelmaschine, die Einrichtungen (112) an ihrem vorderen Ende zur Halterung eines ungewickelten Statorkerns, ein Wickelschiffchen (16), das einen Drahteinlaß (26) an seinem rückwärtigen Ende und einen Drahtauslaß (28) an seinem vorderen Ende besitzt, Einrichtungen zur Umkehrung des Schiffchens in eine nach vorne und in eine umgekehrte Richtung entlang einer vorgegebenen Achse, und Hin- und Herschwingung des Schiffchens unter Drehung um die vorgegebene Achse, um einen Draht (W₁; W₂) von einem Drahtvorrat in den Drahteinlaß hinein und aus dem Drahtauslaß herauszuziehen, um eine Spule um die Flächen eines Statorkerns, der mit der vorgegebenen Achse ausgerichtet ist, zu wickeln, aufweist, dadurch gekennzeichnet, daß die Einrichtungen (120), die an dem Schiffchen (16) befestigt sind, so angeordnet sind, daß sie sich in Eingriff mit dem Bereich des Drahtes bewegen, um in den Einlaß (26) einzutreten, wenn das Schiffchen das Ende jedes seiner nach vorne gerichteten Arbeitstakte erreicht, um unter Reibung die nach vorne gerichtete Bewegung des Drahtes (W₁; W₂) durch das Schiffchen an dem Ende des nach vorne gerichteten Arbeitstaktes des Schiffchen zurückzuhalten.

4. Maschine nach Anspruch 3, dadurch gekennzeichnet, daß das Wickelschiffchen (16) einen Drahteinlaß (26) an seinem rückwärtigen Ende und ein Paar von Drahtauslässen (28) an seinem vorderen Ende für ein Paar von Drähten, die von einem Paar von Drahtvorräten in den Drahteinlaß und aus dem entsprechenden Drahtauslaß austreten, aufweist, um gleichzeitig ein Paar von Spulen um die Flächen eines Statorkerns zu wickeln, der mit der vorgegebenen Achse ausgerichtet ist, wobei die Einrichtungen (120) so angeordnet sind, daß sie sich in Eingriff mit den Bereichen beider Drähte bewegen, um in den Einlaß einzutreten, wenn das Schiffchen das Ende jedes nach vorne gerichteten Arbeitstaktes erreicht, um unter Reibung die nach vorne gerichtete Bewegung der Drähte durch das Schiffchen an dem Ende des nach vorne gerichteten Arbeitstaktes des Schiffchens zurückzuhalten.

5. Maschine nach Anspruch 3 oder 4, dadurch gekennzeichnet, daß die Einrichtungen weiterhin ein Reibungsteil (120) aufweisen, das an dem Schiffchen (16) für eine Bewegung zusammen mit diesem befestigt ist, und die eine Drahteingriffsfläche (122) aufweisen, die nach hinten von dem Drahteinlaß (26) beabstandet und zu diesem hin zugewandt ist.

6. Maschine nach Anspruch 5, dadurch gekennzeichnet, daß die Drahteingriffsfläche (122) konvex ist.

7. Maschine nach Anspruch 5 oder 6, dadurch gekennzeichnet, daß jedes Drahtführungsteil (30 - 42) für die Führung des Drahtes zwischen dem Vorrat und dem Drahteinlaß vorgesehen ist, der so angeordnet ist, daß der Draht zu dem Einlaß von einer Stellung, die entlang einer Achse angeordnet ist, die die vorgegebene Achse und einen Zwischenbereich zwischen der vordersten und der hintersten Stellung des Drahteinlasses (26) schneidet, gerichtet sind, so daß der Draht in die Drahteingriffsfläche der Reibungsplatte eingreift, wenn sich die Platte nach vorne von dem Zwischenbereich bewegt.

8. Maschine nach Anspruch 7, dadurch gekennzeichnet, daß das Führungsteil einstellbar ist, um die Stellung relativ zu der vorgegebenen Achse entlang den Wegen im wesentlichen parallel zu und im wesentlichen senkrecht zu der vorgegebenen Achse einzustellen.

9. Maschine nach Anspruch 7 oder 8, dadurch gekennzeichnet, daß das Schiffchen (16) eine langgestreckte, hohle Spindel (24) aufweist und daß das Reibungsteil eine Reibungsplatte (120) aufweist, die durch Befestigungsteile an dem rückwärtigen Ende der Spindel, mit der Drahteingriffsfläche dazu ausgerichtet, ihr zugewandt und von dem Drahteinlaß beabstandet, getragen wird, aufweist.

10. Maschine nach Anspruch 9, dadurch gekennzeichnet, daß die Teile, die die Reibungsplatte an der Spindel befestigen, einen Träger aufweisen, der Arme (125, 127) besitzt, die außerhalb des Weges der Drahtbereiche, die sich von den Drahtführungsteilen zu dem Drahteinlaß erstrecken, angeordnet sind.

11. Maschine nach Anspruch 9 oder 10, dadurch gekennzeichnet, daß die Reibungsplatte ein erstes Paar von gegenüberliegenden Rändern (124, 126) und ein zweites Paar von gegenüberliegenden Rändern (128, 130) aufweist, wobei die Drahteingriffsfläche einen ersten, größeren Abstand zwischen dem ersten Paar der gegenüberliegenden Ränder und einen zweiten, kürzeren Abstand zwischen dem zweiten Paar der gegenüberliegenden Ränder aufweist und wobei die Reibungsplatte einstellbar befestigt ist, um zu ermöglichen, daß die Reibungsplatte wahlweise so angeordnet werden kann, daß sie entweder in den längeren Abstandsbereich oder in den kürzeren Abstandsbereich der Drahteingriffsfläche des oder jedes Drahtes (W₁; W₂) eingreift.

12. Maschine nach einem der Ansprüche 4 bis 11, dadurch gekennzeichnet, daß die Drahteingriffsfläche hochgradig poliert ist.

## Revendications

1. Procédé de bobinage d'un stator, comportant les étapes consistant à supporter une armature de stator non bobinée à l'extrémité avant d'une machine à bobiner le stator comprenant une navette de bobinage avec une entrée du fil conducteur à son extrémité arrière et une sortie du fil conducteur à son extrémité avant, à guider le fil conducteur vers l'entrée de la navette de bobinage, depuis une source de fil conducteur, le fil conducteur passant à travers la navette de bobinage jusqu'à la sortie, à donner un mouvement de va et vient à ladite navette en direction avant et arrière, le long d'un axe géométrique prédéterminé et à faire osciller en rotation ladite navette autour dudit axe géométrique prédéterminé, faisant ainsi que le fil est tiré hors de la source de fil et qu'il bobine une bobine autour des surfaces de l'armature du stator, procédé caractérisé par le fait que la portion du fil qui est sur le point d'entrer dans ladite entrée lorsque ladite navette approche de l'extrémité de chacune de ses courses avant vient en prise avec une surface convexe pour empêcher, par frottement, le mouvement en avant dudit fil à travers ladite navette à la fin de chaque course en avant de ladite navette.

2. Procédé de bobinage d'un stator à deux pôles, comportant les étapes consistant à supporter une armature de stator non bobinée à l'extrémité avant d'une machine à bobiner le stator comprenant une navette de bobinage avec une entrée du fil à son extrémité arrière et une paire de sorties du fil à son extrémité avant, à guider une paire de fils, depuis une source de fil, vers l'entrée de la navette de bobinage, les fils passant à travers la navette de bobinage jusqu'aux sorties respectives, à donner à ladite navette un mouvement de va et vient en direction avant et arrière le long d'un axe géométrique prédéterminé et à faire osciller en rotation ladite navette autour dudit axe géométrique prédéterminé, faisant ainsi que la paire de fils sont tirés hors de la source de fil et qu'ils bobinent simultanément une paire de bobines autour des surfaces de l'armature du stator, procédé caractérisé par le fait que les portions des fils qui sont sur le point d'entrer dans ladite entrée lorsque ladite navette approche de de l'extrémité de chacune de ses courses avant viennent en prise avec une surface convexe pour empêcher, par frottement, le mouvement en avant desdits fils à travers ladite navette à la fin de chaque course avant de ladite navette.

3. Machine à bobiner le stator, comportant, à son extrémité avant, des moyens (112) pour supporter une armature de stator non bobinée, une navette de bobinage (16) présentant, à son extrémité arrière, une entrée du fil (26) et, à son extrémité avant, une sortie du fil (28), des moyens pour donner un mouvement de va et vient à laidte navette en direction avant et arrière selon un axe géométrique prédéterminé et de faire osciller en rotation ladite navette autour dudit axe géométrique prédéterminé pour tirer un fil (W₁ :W₂), depuis une source de fil, dans ladite entrée du fil et hors de ladite sortie du fil pour bobiner une bobine autour des surfaces d'une armature de stator alignée avec ledit axe géométrique prédéterminé, machine caractérisée en ce que des moyens (120), montés sur ladite navette (16), sont disposés pour venir en prise avec la portion du fil qui est sur le point d'entrer dans ladite entrée (26) lorsque ladite navette approche de l'extrémité de chacune de ses courses avant pour empêcher, par frottement, le mouvement en avant dudit fil (W₁;W₂) à travers ladite navette à la fin de la course avant de ladite navette.

4. Machine selon la revendication 3, dans laquelle la navette de bobinage (16) présente, à son extrémité arrière, une entrée de fil (26) et, à son extrémité avant, une paire de sorties de fil (28) pour une paire de fils à tirer, depuis une paire de sources de fil, dans ladite entrée de fil et hors desdites sorties respectives de fil pour bobiner simultanément une paire de bobines autour des surfaces d'une armature de stator alignée avec ledit axe géométrique prédéterminé, lesdits moyens (120) étant disposés pour venir en prise avec les portions des deux fils qui sont sur le point d'entrer dans ladite entrée lorsque ladite navette approche de l'extrémité de chacune de ses courses avant pour empêcher, par frottement, le mouvement en avant desdits fils à travers ladite navette à la fin de la course avant de ldite navette.

5. Machine selon la revendication 3 ou 4, dans laquelle lesdits moyens sont constitués d'un élément de friction (120) monté sur ladite navette (16) pour être entrainé en mouvement avec elle et présentan une surface (122) de prise du fil espacée, vers l'arrière, de ladite entrée de fil (26) et faisant face à cette entrée.

6. Machine selon la revendication 5, dans laquelle ladite surface (122) de prise du fil est convexe.

7. Machine selon la revendication 5 ou 6, dans laquelle, pour le fil, ou pour chaque fil, des moyens de guidage (30-42) sont prévus pour guider le fil entre ladite source et ladite entrée du fil, et sont disposés pour diriger le fil vers l'entrée depuis une position située le long d'un axe intersectant ledit axe géométrique prédéterminé et intermédiaire entre la position la plus en avant et la position la plus en arrière de ladite entrée du fil (26) de façon que ledit fil vienne en prise avec ladite surface de prise du fil de ladite plaque de friction lorsque ladite plaque vient en avant de ladite position intermédiaire.

8. Machine selon la revendication 7, dans laquelle lesdits moyens de guidage sont ajustables pour faire varier ladite position par rapport audit axe géométrique prédéterminé le long de chemins sensiblement parallèles et sensiblement perpendiculaires audit axe géométrique prédéterminé.

9. Machine selon la revendication 7 ou 8, dans laquelle ladite navette (16) comporte une broche creuse (24) de forme allongée, et dans laquelle l'élément de friction est constitué d'une plaque de friction (120) portée, par des moyens de montage, sur l'extrémité arrière de ladite broche, ladite surface de prise avec le fil étant alignée avec ladite entrée du fil, étant située en face, et espacée, de cette entrée.

10. Machine selon la revendication 9, dans laquelle lesdits moyens de montage de ladite plaque de friction sur ladite broche sont constitués d'un support présentant des bras (125, 127) situés en dehors du chemin des portions de fil s'étendant desdits moyens de guidage du fil à ladite entrée du fil.

11. Machine selon la revendication 9 ou 10 dans laquelle ladite plaque de friction présente une première paire de bords opposés (124, 126) et une seconde paire de bords opposés (128, 130), ladite surface de prise du fil présentant une première dimension, plus grande, entre ladite première paire de bords opposés et une seconde dimension, plus petite, entre ladite seconde paire de bords opposés, et dans laquelle ladite plaque de friction est montée réglable pour permettre de positionner au choix ladite plaque de friction de façon que ce soit soit ladite portion de dimension plus grande, soit ladite portion de dimension plus courte de ladite surface de prise du fil qui vienne en prise avec le fil ou avec chaque fil (W₁; W₂).

12. Machine selon l'une quelconque des revendications 4 à 11, dans laquelle la surface de prise du fil est extrêmement polie.
